# EUROPEAN PATENT SPECIFICATION

(11) **EP 1 813 147 B1**
(45) Date of publication and mention of the grant of the patent: **23.09.2009**
(21) Application number: 07100910.4
(22) Date of filing: 22.01.2007
(51) Int. Cl.: A01K 31/00, A01K 31/22

(54) **Breeding device for poultry**
Zuchtvorrichtung für Geflügel
Dispositif d'élevage pour volaille

(30) Priority: 31.01.2006 NL 1031034
(43) Date of publication of application: 01.08.2007
(73) Proprietor: Van de Ven Beheer B.V., 5521 DZ Eersel (NL)
(72) Inventor: Bazelmans, Simon Willem Gerardus, 5524 KB Steensel (NL)
(74) Representative: Verhees, Godefridus Josephus Maria

(56) References cited:
- EP-A- 0 965 266
- CH-A- 670 032
- GB-A- 158 408
- US-A- 3 032 010

## Description

### BACKGROUND OF THE INVENTION:

### Field of the invention

The invention relates to a breeding contrivance for poultry comprising an outer cage that is provided with a cage frame with wire netting sidewalls, of which one sidewall forms a front wall that can be opened fully or partly by folding open or pushing the wire netting aside wholly or partly, a bottom living platform for poultry present in the outer cage at a distance above the bottom of the outer cage, and a top living platform for poultry present at a distance above the bottom living platform, whereby the breeding contrivance also comprises an inner cage that is present above the bottom living platform in the outer cage, which inner cage is also provided with a cage frame with wire netting sidewalls, one sidewall of which forms a front wall that can be opened wholly or partly by folding open or pushing the wire netting aside wholly or partly, in which the top living platform is present in the inner cage and the bottom living platform extends to beyond the front wall of the inner cage.

More in particular the invention relates to breeding contrivances, in which chickens can be taught to jump during their growth in the breeding contrivance, which will be necessary in the stalls in which they will later live.

### Prior art

Such a breeding contrivance is known from CH-A-670032. In the known breeding contrivance there are several living platforms above each other in the outer cage. A poultry farmer can thus look after the animals from the outside with the known breeding contrivance. The known breeding contrivance also has several folding balconies, which extend from the front wall to the outside when folded out. This can increase the living space for the poultry. The balconies also form an intermediate level for the animals via which they can reach the higher living platforms. This is necessary as the chickens grow bigger and need more living space. The depth of the outer cage is larger than that of the known breeding contrivance as the bottom living platform extends beyond the front wall of the inner cage. If work has to be done in the space above the top living platform, the worker can stand on the section of the bottom living platform that extends beyond the front wall of the inner cage, so that he can work efficiently in the top space.

### Summary of the invention

An objective of the invention is to improve the known breeding contrivance. For this purpose the breeding contrivance according to the invention as defined in claim 1, is characterised in that the breeding contrivance also comprises a balcony that folds in and out and which can be moved in a vertical direction. This allows the balcony to be brought to a higher level, as the chickens grow bigger, in order to better teach the chickens to jump. This is a big advantage over the out-folding balconies of the known breeding contrivance, which cannot be moved vertically but are at a fixed height above the ground.

It is noted that a balcony that can be moved in a vertical direction is not only usable in a breeding contrivance, in which the bottom living platform extends beyond the inner cage, but can also be used in other breeding contrivances, for example in the known breeding contrivance.

It is noticed that from EP-A-0 965 266 a device for keeping poultry is known, having balconies which can be turned about a horizontal axis. However in this device the bottom living platform does not extend beyond the front wall of the top living platform.

An embodiment of the breeding contrivance according to the invention is characterised in that the front wall of the inner cage is provided with a wall frame within which wire netting extends, which wall frame can be turned about a horizontal axis and forms the folding balcony. This axis can be a physical shaft, though can also be imaginary, for example in the case that the wall frame can be moved along a guide and thus turns around an imaginary axis. The front wall of the inner cage in the opened position also serves as a balcony for the poultry. This means that no extra out-folding balconies are needed.

A further disadvantage of the known breeding contrivance is that there is no conveyor belt for the removal of droppings under the balconies. A still further embodiment of the breeding contrivance according to the invention, in which this disadvantage does not occur, is characterised in that the bottom living platform extends so far beyond the front wall of the inner cage that the wall frame is above the living platform when in the horizontal position.

If the axis is a physical shaft and not an imaginary axis, the axis can preferably be moved in a vertical direction in order thus to move the balcony formed by the wall frame in a vertical direction.

In a favourable construction to be able to move the wall frame vertically, the axis is connected to at least one stretched flexible element that can be wrapped around a reel near the top of the outer cage.

Preferably, the axis is connected via at least one connecting element to a rod that is parallel to and at a distance from the axis, in which the flexible element is connected to the rod.

Moreover, the wall frame is preferably connected between the axis and the outward-turning lengthwise edge of the wall frame to at least one further stretched flexible element, which can be wrapped around a further reel present on the rod.

Furthermore, preferably at least one end of the axis and of the rod can be moved in a vertical guide.

A further embodiment of the breeding contrivance according to the invention is characterised in that the axis is present between the lengthwise edges of the wall frame, in which wire netting is present between the axis and the outward-turning lengthwise edge, and the wall frame between the axis and the other lengthwise edge is open, so that this other lengthwise edge forms a perch for poultry.

Still a further embodiment of the breeding contrivance according to the invention is characterised in that there is a space under the bottom living platform, which is sufficiently high to allow poultry to walk under the living platform.

In order to open the front walls wholly or partly the wire netting preferably comprises several wire netting panels, several of which can be pushed aside or folded open.

### Brief description of the drawings

The invention will be elucidated more fully below on the basis of drawings in which an embodiment of the breeding contrivance according to the invention is shown. In these drawings:
Figure 1 shows an embodiment of the breeding contrivance according to the invention in perspective with folded-out wall frames;
Figure 2 shows the breeding contrivance in perspective with folded-in wall frames;
Figure 3 shows the breeding contrivance in transverse cross-section with folded-out wall frames;
Figure 4 shows the breeding contrivance in transverse cross-section with folded-in wall frames;
Figure 5 shows the wall frame of the breeding contrivance in detail in the folded-out position;
Figure 6 shows the wall frame of the breeding contrivance in the folded-in position; and
Figure 7 shows the wall frame of the breeding contrivance in the folded-in position with a folded-open wire netting panel.

### Detailed description of the drawings

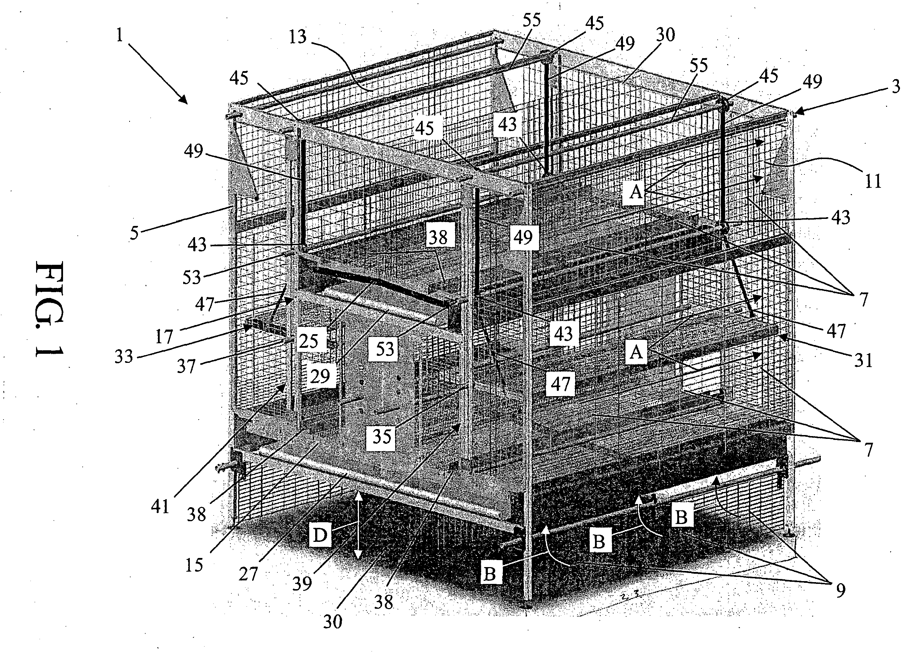

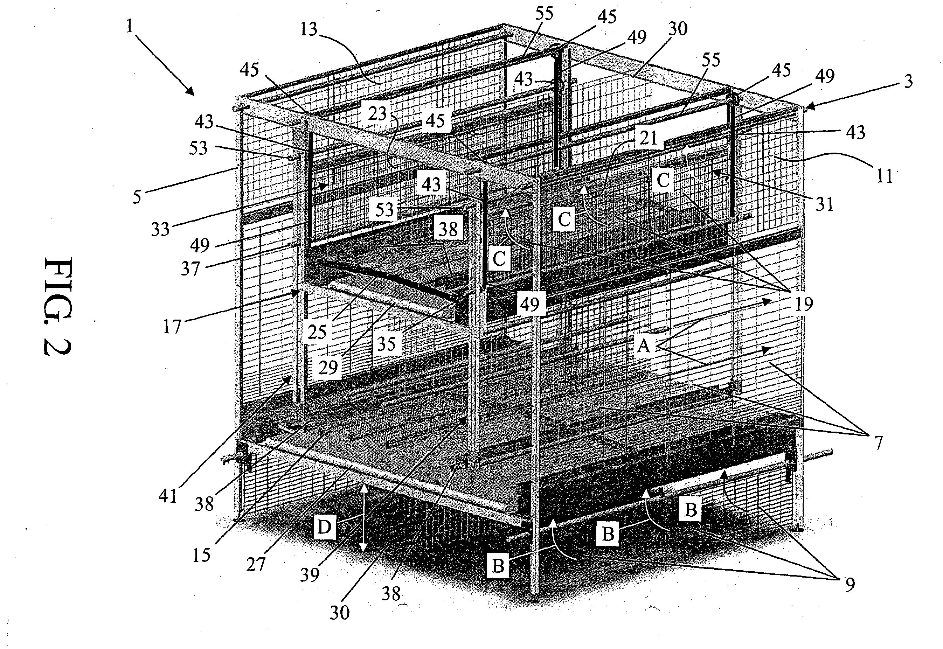

Figures 1 and 2 show an embodiment of the breeding contrivance for poultry according to the invention in perspective with wall frames in the folded-out and folded-in positions respectively. The breeding contrivance 1 has an outer cage 3, which is provided with a cage frame 5 with sidewalls formed of wire netting panels 7, 9. One of the sidewalls forms a front wall 11 and another forms a rear wall 13. The front wall and the rear wall can be partly opened by pushing aside one or more of the wire netting panels 7 in the direction of arrows A, or opening out one or more of the wire netting panels 9 in the direction of arrows B.

There is a bottom living platform 15 for poultry present in the outer cage 3, which is at a distance D above the open bottom of the outer cage. This distance is sufficiently large to allow poultry to walk under the living platform. The breeding contrivance 1 also has an inner cage 17, which is present in the outer cage 3 above the bottom living platform 15. The inner cage is also provided with a cage frame with sidewalls formed by wire netting panels 19. In this, opening out one or more wire netting panels in the direction of arrows C can also wholly or partly open a front wall 21 and a rear wall 23 of the sidewalls. There is a top living platform 25 present in the inner cage 17, which is at a distance above the bottom living platform 15.

There are conveyor belts 27, 29 to remove droppings under each living platform 15, 25. The bottom living platform 15, with the conveyor belt 27 underneath it, extends beyond the front wall 21 and rear wall 23 of the inner cage 17.

The outer and inner cage 3, 17 are both divided into two compartments by intermediate wire netting partitions 30. Wire netting panels, several of which can also be pushed aside to form passageways, also close off both the other sidewalls of both the outer and the inner cage.

The front and rear walls 21, 23 of the inner cage 17 are each provided with a wall frame 31, 33 within which the wire netting panels 19 extend. Each wall frame 31, 33 can be turned about horizontal axes 35, 37. These wall frames when opened out form balconies for the poultry, see figure 1. The bottom living platform 15 extends fully under the wall frames 31, 33 when opened out, so that the droppings of the poultry present on the wall frames will also fall onto the conveyor belt 27.

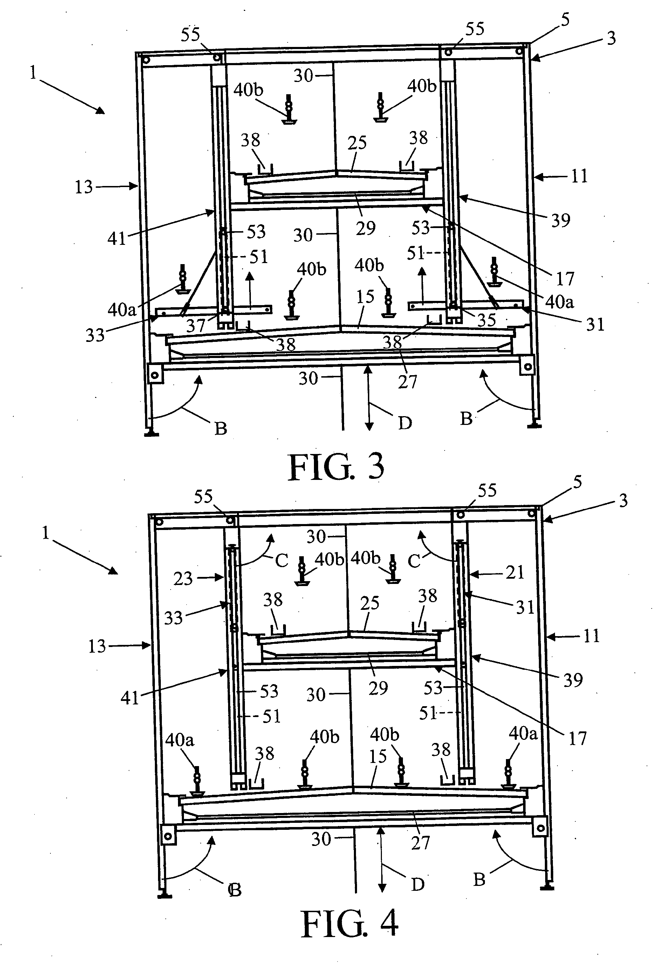

The wall frames 31, 33 can also be moved in a vertical direction as the axes 35, 37 can be moved in vertical guides 39, 41. This means that the balconies formed by the wall frames can be brought to any desired level. To clarify this, the wall frames 31, 33 are shown in figures 3 and 4 in the folded-out and folded-in positions respectively, in which they close off the inner cage 17. There are feed gutters 38 and drinking troughs 40a and 40b in the outside and inside cages 3, 17. The heights of the drinking troughs can be adjusted by a mechanism that is not shown. The outermost drinking troughs 40a are first raised above the wall frames if the wall frames 31, 33 are to be folded out. The wall frames are then folded out and the drinking troughs 40a are then brought to just above the folded-out wall frames. The drinking troughs 40a here also serve to attract the chickens to the wall frames 31, 33, which promotes the mobility of the poultry.

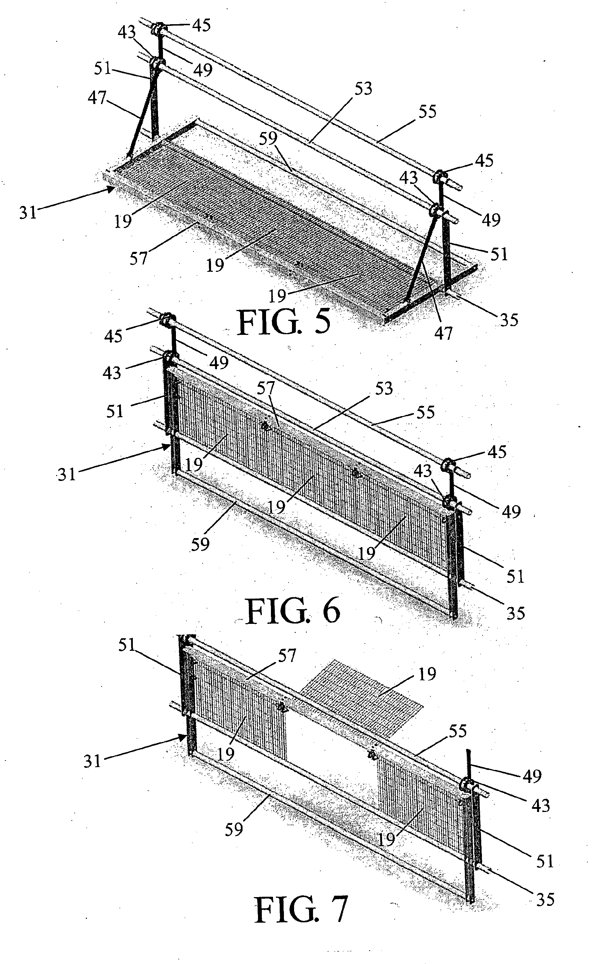

The mechanisms for turning and moving the wall frames 31 and 33 in a vertical direction are formed by reels 43 and 45 on which stretched flexible elements, formed by belts 47 and 49, are wrapped. To clarify this, the wall frame 31 is shown in detail in figures 5 and 6 in the folded-out and folded-in position respectively. The axis 35 of the wall frame 31 is connected to a rod 53, which is fastened on the reels 43 near each end via a connecting element 51. There is a further rod 55 present near the top of the outer cage, on which the reels 45 are fastened.

The belts 47 are fastened by an end, somewhere between the axis 35 and the lengthwise edge 57 of the outward-turning wall frame 31, to the wall frame 31, and by the other ends to the reels 43. The belts 49 are also fastened by an end to the reels 43 and to the reels 45 by the other ends.

The belts 49 are wrapped onto the reels 45 by turning the further rod 55 so that the folded-out wall frame 31 is raised. The wall frame 31 is simultaneously turned into the folded-in position and the wall frame 31 is raised further by then turning the rod 53.

The axis 35 is present between both lengthwise edges 57, 59 of the wall frame 31. The space between the axis 35 and the outward-turning lengthwise edge 57 is closed off by the three wire netting panels 19 and the space between the axis 35 and the other lengthwise edge 59 is open, so that this other lengthwise edge forms a perch for poultry.

The wire netting panels 19 can each be folded open separately to provide a passageway when the wall frame is folded in. Figure 7 shows the wall frame 31 in the folded-in position with a folded-open wire netting panel 19.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Breeding contrivance (1) for poultry comprising:
- an outer cage (3) that is provided with a cage frame (5) with wire netting sidewalls (7,9,11,13), of which one sidewall forms a front wall (11) that can be opened fully or partly by folding open or pushing the wire netting aside wholly or partly,
- a bottom living platform (15) for poultry present in the outer cage (3) at a distance above the bottom of the outer cage, and
- a top living platform (25) for poultry present at a distance above the bottom living platform (15),
whereby the breeding contrivance also comprises an inner cage (17) that is present above the bottom living platform (15) in the outer cage (3), which inner cage (17) is also provided with a cage frame with wire netting sidewalls, (19,21,23), one sidewall of which forms a front wall (21) that can be opened wholly or partly by folding open or pushing the wire netting aside wholly or partly, in which the top living platform is present in the inner cage (17) and the bottom living platform (15) extends to beyond the front wall (21) of the inner cage (17),
**characterised in that** the breeding contrivance (1) also comprises a balcony (31,33) that can be folded in or out and which can be moved in a vertical direction.

2. Breeding contrivance (1) according to claim 1, **characterised in that** the front wall (21) of the inner cage (17) is provided with a wall frame (31,33) within which wire netting extends, which wall frame can be turned about a horizontal axis (35,37) and forms the balcony that can be folded in or out.

3. Breeding contrivance (1) according to claim 2, **characterised in that** the bottom living platform (15) extends to such an extent beyond the front wall (21) of the inner cage (17) that the wall frame (31,33) is above the living platform (25) when in the horizontal position.

4. Breeding contrivance (1) according to claim 2 or 3, **characterised in that** the axis (35,37) can be moved in a vertical direction.

5. Breeding contrivance (1) according to claim 4, **characterised in that** the axis (35,37) is connected to at least one stretched flexible element (49), which can be wrapped around a reel (45) present near the top of the outer cage (3).

6. Breeding contrivance (1) according to claim 5, **characterised in that** the axis (35,37) is connected via at least one connecting element () to a rod (55) parallel to and at a distance from the axis, in which the flexible element (49) is connected to the rod.

7. Breeding contrivance (1) according to claim 6, **characterised in that** the outward-turning lengthwise edge (57) of the wall frame (31) is connected to at least one further stretched flexible element (47), which can be wrapped around a further reel (43) present on the rod (53).

8. Breeding contrivance (1) according to claim 6 or 7, **characterised in that** at least one end of the axis (35,37) and of the rod (53) can be moved in a vertical guide (39,41).

9. Breeding contrivance (1) according to one of the preceding claims 2 to 8, **characterised in that** the axis (35,37) is present between the lengthwise edges (57,59) of the wall frame (31), in which wire netting is present between the axis (35,37) and the outward-turning lengthwise edge (57) and the wall frame (31) is open between the axis (35,37) and the other lengthwise edge (59), so that this other lengthwise edge forms a perch for poultry.

10. Breeding contrivance (1) according to one of the preceding claims, **characterised in that** there is a space under the bottom living platform (15), which is sufficiently high to allow poultry to walk under the living platform.

11. Breeding contrivance (1) according to one of the preceding claims, **characterised in that** the wire netting comprises several wire netting panels (19), several of which can be pushed aside or folded open.

## Patentansprüche

1. Aufzuchtvorrichtung (1) für Geflügel, bestehend aus:
- einem Außenkäfig (3), der über einen Käfigrahmen (5) mit Seitenwänden (7, 9, 11, 13) aus Drahtgeflecht verfügt, wobei eine der Seitenwände eine Stirnwand (11) bildet, die sich ganz oder teilweise öffnen lässt, indem das Drahtgeflecht ganz oder teilweise zur Seite geschoben oder aufgeklappt wird,
- einem unteren Laufboden (15) für Geflügel, der sich in dem Außenkäfig (3) befindet und im Abstand zur Unterseite des Außenkäfigs angeordnet ist, und
- einem im Abstand zum unteren Laufboden (15) angeordneten oberen Laufboden (25) für Geflügel,
wobei die Aufzuchtvorrichtung ferner einen Innenkäfig (17) umfasst, der sich über dem unteren Laufboden (15) in dem Außenkäfig (3) befindet, wobei der Innenkäfig (17) ebenfalls über einen Käfigrahmen mit Seitenwänden (19, 21, 23) aus Drahtgeflecht verfügt, wobei eine der Seitenwände eine Stirnwand (21) bildet, die sich ganz oder teilweise öffnen lässt, indem das Drahtgeflecht ganz oder teilweise zur Seite geschoben oder aufgeklappt wird, und wobei der obere Laufboden in dem Innenkäfig (17) angeordnet ist und der untere Laufboden (15) bis über die Stirnwand des Innenkäfigs (17) hinausreicht, **dadurch gekennzeichnet, dass** die Aufzuchtvorrichtung (1) ferner einen ein- und ausklappbaren Balkon (31, 33) umfasst, der vertikal verschiebbar ist.

2. Aufzuchtvorrichtung (1) nach Anspruch 1, **dadurch gekennzeichnet, dass** die Stirnwand (21) des Innenkäfigs (17) mit einem Wandrahmen (31, 33) versehen ist, in dem sich das Drahtgeflecht befindet, wobei der Wandrahmen um eine horizontale Drehachse (35, 37) geschwenkt werden kann und den ein- und ausklappbaren Balkon bildet.

3. Aufzuchtvorrichtung (1) nach Anspruch 2, **dadurch gekennzeichnet, dass** der untere Laufboden (15) so weit über die Stirnwand (21) des Innenkäfigs (17) hinausreicht, dass sich der Wandrahmen (31, 33) in horizontaler Stellung über dem Laufboden (25) befindet.

4. Aufzuchtvorrichtung (1) nach einem der Ansprüche 2 oder 3, **dadurch gekennzeichnet, dass** die Drehachse (35, 37) vertikal verschiebbar ist.

5. Aufzuchtvorrichtung (1) nach Anspruch 4, **dadurch gekennzeichnet, dass** die Drehachse (35, 37) mit mindestens einem langgestreckten flexiblen Element (49) gekoppelt ist, das auf eine in der Nähe der Oberseite des Außenkäfigs (3) vorhandene Haspel (45) aufgewickelt oder von dieser abgewickelt werden kann.

6. Aufzuchtvorrichtung (1) nach Anspruch 5, **dadurch gekennzeichnet, dass** die Drehachse (35, 37) über mindestens ein Verbindungselement mit einem parallel und im Abstand zu der Drehachse angeordneten Stab (53) verbunden ist, wobei das flexible Element (49) mit dem Stab verbunden ist.

7. Aufzuchtvorrichtung (1) nach Anspruch 6, **dadurch gekennzeichnet, dass** der nach außen schwenkende längsseitige Rand (57) des Wandrahmens (31) mit mindestens einem weiteren langgestreckten flexiblen Element (47) verbunden ist, das auf eine auf dem Stab (53) vorhandene weitere Haspel (43) aufgewickelt oder von dieser abgewickelt werden kann.

8. Aufzuchtvorrichtung (1) nach einem der Ansprüche 6 oder 7, **dadurch gekennzeichnet, dass** mindestens ein Ende der Drehachse (35, 37) und des Stabes (53) auf einer vertikalen Führung (39, 41) verschiebbar angeordnet ist.

9. Aufzuchtvorrichtung (1) nach einem der vorangegangenen Ansprüche, **dadurch gekennzeichnet, dass** die Drehachse (35, 37) zwischen den längsseitigen Rändern (57, 59) des Wandrahmens (31) angeordnet ist, wobei zwischen der Drehachse (35, 37) und dem nach außen schwenkenden längsseitigen Rand (57) Drahtgeflecht vorhanden ist und der Wandrahmen (31) zwischen der Drehachse (35, 37) und dem anderen längsseitigen Rand (59) offen ist, wobei dieser andere längsseitige Rand eine Sitzstange für Geflügel bildet.

10. Aufzuchtvorrichtung (1) nach einem der vorangegangenen Ansprüche, **dadurch gekennzeichnet, dass** sich unter dem unteren Laufboden (15) ein Raum befindet, der so groß bemessen ist, dass Geflügel unter dem Laufboden hindurchlaufen kann.

11. Aufzuchtvorrichtung (1) nach einem der vorangegangenen Ansprüche, **dadurch gekennzeichnet, dass** das Drahtgeflecht mehrere Drahtgeflechtpaneele umfasst, von denen mehrere zur Seite geschoben oder aufgeklappt werden können.

## Revendications

1. Dispositif pour l'élevage (1) de volaille comprenant:
- une cage extérieure (3) pourvue d'un châssis de cage (5) ayant des parois latérales (7,9,11,13) en toile métallique, l'une des parois latérales formant une paroi avant (11) pouvant être entièrement ou partiellement ouverte en poussant ou en ouvrant entièrement ou partiellement la toile métallique.
- un plateau habitable inférieur (15) pour la volaille présente dans la cage extérieure (3), à distance et au dessus de la face inférieure de la cage extérieure, et
- un plateau habitable supérieur (25) pour la volaille présente, à distance et au dessus du plateau habitable inférieur (15),
où le dispositif pour l'élevage comprend en outre une cage intérieure (17) se trouvant au dessus du plateau habitable inférieur (15) dans la cage extérieure (3), laquelle cage intérieure (17) est également pourvue d'un châssis de cage ayant des parois latérales (19,21,23) en toile métallique, l'une des parois latérales formant une paroi avant (21) pouvant être entièrement ou partiellement ouverte en poussant ou en ouvrant entièrement ou partiellement la toile métallique, où le plateau habitable supérieur se trouve dans la cage intérieure (17) et où le plateau habitable inférieur (15) s'étend jusqu'au-delà de la paroi avant (21) de la cage intérieure (17), **caractérisé en ce que** le dispositif pour l'élevage (1) comprend en outre une plateforme pliable et dépliable (31,33) pouvant être déplacée dans le sens vertical.

2. Dispositif pour l'élevage (1) selon la revendication 1, **caractérisé en ce que** la paroi avant (21) de la cage intérieure (17) est pourvue d'un châssis de paroi (31,33) dans lequel s'étend la toile métallique, lequel châssis de paroi peut tourner autour d'un axe de rotation horizontal (35,37) et forme la plateforme pliable et dépliable.

3. Dispositif pour l'élevage (1) selon la revendication 2, **caractérisé en ce que** le plateau habitable inférieur (15) s'étend loin au-delà de la paroi avant (21) de la cage intérieure (17) de telle sorte que le châssis de paroi (31,33) se trouve en position horizontale au dessus du plateau habitable (25).

4. Dispositif pour l'élevage (1) selon la revendication 1 ou 2, **caractérisé en ce que** l'axe de rotation (35,37) peut être déplacé dans le sens vertical.

5. Dispositif pour l'élevage (1) selon la revendication 4, **caractérisé en ce que** l'axe de rotation (35,37) est couplé à au moins un élément allongé flexible (49) qui peut être enroulé sur et déroulé d'un dévidoir (45) se trouvant près de la face supérieure la cage extérieure (3).

6. Dispositif pour l'élevage (1) selon la revendication 5, **caractérisé en ce que** l'axe de rotation (35,37) est relié par l'intermédiaire d'au moins un élément de liaison à une tige (53) parallèle à et se trouvant à distance de l'axe de rotation, où l'élément flexible (49) est relié à la tige.

7. Dispositif pour l'élevage (1) selon la revendication 6, **caractérisé en ce que** le bord longitudinal (57), tournant vers l'extérieur, du châssis de paroi (31) est relié à au moins un autre élément allongé flexible (47) qui peut être enroulé sur et déroulé d'un autre dévidoir (43) se trouvant sur la tige (53).

8. Dispositif pour l'élevage (1) selon la revendication 6 ou 7, **caractérisé en ce qu'**au moins une extrémité de l'axe de rotation (35,37) et de la tige (53) peut être déplacée dans le guidage vertical (39,41).

9. Dispositif pour l'élevage (1) selon une des revendications précédentes, **caractérisé en ce que** l'axe de rotation (35,37) est présent entre les bord longitudinaux (57,59) du châssis de paroi (31), où de la toile métallique est présente entre l'axe de rotation (35,37) et le bord longitudinal (57) tournant vers l'extérieur, et **en ce que** le châssis de paroi (31) entre l'axe de rotation (35,37) et l'autre bord longitudinal (59) est ouvert, où cet autre bord longitudinal forme un perchoir pour la volaille.

10. Dispositif pour l'élevage (1) selon une des revendications précédentes, **caractérisé en ce que** sous le plateau habitable inférieur (15) se trouve un espace qui est suffisamment haut pour permettre à la volaille de se déplacer sous le plateau habitable.

11. Dispositif pour l'élevage (1) selon une des revendications précédentes, **caractérisé en ce que** la toile métallique comprend un certain nombre de panneaux de toile métallique (19) dont un certain nombre peuvent être poussés ou ouverts.
